# EUROPEAN PATENT APPLICATION

(11) **EP 1 589 690 A1**
(43) Date of publication of application: **26.10.2005**
(21) Application number: 05004161.5
(22) Date of filing: 25.02.2005
(51) Int. Cl.: H04L 12/24, H04L 29/06, H04N 5/44

(54) **Display apparatus, information terminal apparatus, network system, and network configuring method**

(30) Priority: 04.03.2004 JP 2004061423; 27.12.2004 JP 2004377504
(71) Applicant: SONY CORPORATION, Tokyo (JP)
(72) Inventor: Kimura, Shingo, Shinagawa-ku Tokyo (JP)
(74) Representative: Müller - Hoffmann & Partner

(57) **Abstract**

A display apparatus having a first storage section for storing configuration information to perform network connection, and a display section, includes a communications section for performing communications via a network, a second storage section comprised of a non-volatile storage medium and is loadable into an information terminal apparatus connected to the display apparatus by network connection via the communications section for storing configuration information corresponding to the configuration information stored in the first storage section, and a control section for performing configuration so as to enable communications via the network by reading the configuration information from the first storage section, and for controlling to output to the display section information transmitted from the information terminal apparatus and received via the communications section.

## Description

### BACKGROUND OF THE INVENTION

### 1. Field of the Invention

The present invention relates to a display apparatus, an information terminal apparatus, a network system and a network configuring method, and more specifically relates to an information terminal apparatus, such as a personal computer or the like, a display apparatus that receives, via a network, information transmitted from the information terminal apparatus and displays that information, and a network system that sets up a network between the display apparatus and the information terminal apparatus. Further, the present invention relates to a method of configuring a network in setting up a network between the display apparatus and the information terminal apparatus.

### 2. Description of Related Art

In general, as apparatuses for displaying an image (hereinafter referred to as image display apparatuses), image display apparatuses such as projection display systems comprised of a predetermined plane of projection (projection screen) and an image projection apparatus (projector: PJ) that projects and displays an image on the screen, cathode ray tube (CRT) display apparatuses that display an image using cathode rays, image display apparatuses that display an image on a liquid crystal display (LCD) section and the like are known. Such image display apparatuses generally are capable of receiving image information that is transmitted from an information terminal apparatus, such as a personal computer, through wire communications or wireless communications, and of displaying an image corresponding to the received image information.

In an image display system comprised of an image display apparatus, an information terminal apparatus and a network based on wire communications or wireless communications, configuration for network connection becomes necessary in connecting the image display apparatus and the information terminal apparatus to the network. Several such methods of configuration for network connection are disclosed in Patent Document 1 and Patent Document 2 mentioned below.

The configuring method disclosed in the Patent Document 1 mentioned below is as follows. An image display apparatus is provided with an identification symbol generating section, and projects and displays on a screen the generated identification symbols, such as an IP address. The user of an information terminal apparatus is able to know the identification number of the image display apparatus projecting an image onto the screen by looking at the identification symbols displayed on the screen. Thus, it is possible to transmission information to that image display apparatus via a network.

The configuring method disclosed in the Patent Document 2 mentioned below is as follows. An image display apparatus is provided with a password generating section, and projects the generated password onto a screen. On the side of a personal computer, the user enters the password projected onto the screen using a keyboard, and performs an authentication request for establishing communications. A projector (the image display apparatus) confirms the password in response to the authentication request from the personal computer, and stops projecting the password onto the screen once the connection with the personal computer is established. In addition, the projector projects onto the screen configuration information for network connection. Among the configuration information, an encryption key (WEP key) for a method of encrypted communications referred to as WEP (Wired Equivalent Privacy) is also included.

Patent Document 1: Japanese Laid-Open Patent Application No. 2002-123238
Patent Document 2: Japanese Laid-Open Patent Application No. 2003-69923

### SUMMARY OF THE INVENTION

According to the configuring methods for network connection disclosed in the Patent Document 1 and the Patent Document 2, in order to achieve network connection, the user has to configure both the image display apparatus and the information terminal apparatus upon each connection, for which some degree of knowledge and amount of time are necessary, and thus, these methods were missing opportunities to be used even when they were incorporated into commercially sold products.

In addition, even in cases where they were actually used, it was possible for some person other than the intended user to obtain the identification number (or password) for the image display apparatus (projector). Even if the projector was used in some exclusive space, such as a conference room, and was not accessible to people from outside, having the identification number (password) be known by someone other than the intended user is not desirable from a security standpoint. Further, in a worse case, having the identification number be displayed on the screen at a venue that is accessible to the public, such as an exhibition, would allow malicious and unauthorized connection from outside, and make it difficult to ensure the confidentiality of the data being communicated.

Particularly, in the Patent Document 2, since the WEP key is also projected onto the screen, it may lead to allowing unauthorized decryption of the encrypted data by a malicious third party using the WEP key, and poses a significant security threat.

The present invention is made in view of the circumstances mentioned above, and seeks to provide a display apparatus which makes network connection configuration simple, and which ensures security. In addition, the present invention seeks to provide a network system which makes network connection configuration for a host information processing apparatus and an information terminal apparatus simple, and which ensures security. Further, the present invention seeks to provide a network configuring method which makes network connection configuration for a host and an information terminal apparatus simple, and which ensures security.

In order to solve the problems above, a display apparatus related to the present invention is a display apparatus including first storage means for storing configuration information to perform network connection, and a display section, and is comprised of communications means for performing communications via a network, second storage means comprised of a non-volatile storage medium and is loadable into an information terminal apparatus connected to the above-mentioned display apparatus by network connection via the above-mentioned communications means for storing configuration information corresponding to the configuration information stored in the above-mentioned first storage means, and control means for performing configuration so as to enable communications via the network by reading the configuration information from the above-mentioned first storage means, and for controlling to output to the above-mentioned display section information transmitted from the above-mentioned information terminal apparatus and received via the above-mentioned communications means.

According to this display apparatus, by storing the configuration information corresponding to the configuration information for performing network connection stored in the first storage means in the second storage means comprised of the non-volatile storage medium, and loading this second storage means into the information terminal apparatus, data transmitted from the information terminal apparatus and received via the communications means is outputted to the display section under the control of the control section.

In order to solve the problems above, an information terminal apparatus related to the present invention is an information terminal apparatus which includes a display section and communications means, and which transmits via the above-mentioned communications means information displayed on the above-mentioned display section to a display apparatus connected to a network, and is comprised of loading means for loading a non-volatile storage medium storing configuration information generated in advance from information unique to the above-mentioned display apparatus, and control means for performing network connection configuration by reading the above-mentioned configuration information from the above-mentioned non-volatile storage medium loaded into the above-mentioned loading means by operation and for performing control so as to output the above-mentioned information to the above-mentioned communications means.

According to this information terminal apparatus, the non-volatile storage medium storing the configuration information generated in advance from the information that is unique to the display apparatus is loaded into the loading means, the configuration information is read from the non-volatile storage medium under the control of the control means as operated, network connection configuration is performed, and information is outputted to the communications means.

In order to solve the problems above, a network system related to the present invention is a network system including a display apparatus and which sets up a network with an information terminal apparatus, wherein the above-mentioned display apparatus is comprised of first communications means for performing network connection with the above-mentioned information terminal apparatus, first storage means for storing configuration information to perform the above-mentioned network connection, a display section, control means for performing configuration to make communications via the network by reading the configuration information from the above-mentioned first storage means and for transmitting to the display section the information received from the above-mentioned information terminal apparatus via the above-mentioned first communications means, and second storage means able to be loaded into the above-mentioned information processing apparatus and is comprised of a non-volatile storage medium storing configuration information generated in advance from information unique to the above-mentioned display apparatus, and wherein the above-mentioned information terminal apparatus is comprised of a display section, second communications means for transmitting information displayed on the above-mentioned display section to the display apparatus connected to the network, loading means for loading the above-mentioned second storage means, and control means for performing configuration so as to enable communications via the network by detecting if the above-mentioned second storage means is loaded into the above-mentioned loading means, and by reading the above-mentioned configuration information from the above-mentioned second storage means, and for controlling so as to output the above-mentioned information to the above-mentioned second communications means.

By storing the configuration information corresponding to the configuration information for performing network connection stored in the first storage means in the second storage means comprised of the non-volatile storage medium, and loading this second storage means into the information terminal apparatus, the display apparatus outputs, under the control of the control section, to the display section the information transmitted from the information terminal apparatus and received via the first communications means. In addition, when the control means detects that the above-mentioned second storage means is loaded into the leading means, the information terminal apparatus has the control means read the configuration information from second storage means, perform configuration so as to enable communications via the network, and transmission information to the display apparatus via the second communications means.

In order to solve the problems above, a network configuring method related to the present invention is a network configuring method for connecting an information terminal apparatus to a network with respect to a display apparatus, and is comprised of a step of reading, from a non-volatile storage medium storing configuration information generated in advance from information unique to the above-mentioned display apparatus, the above-mentioned configuration information by operation, and a step of performing network connection configuration based on the above-mentioned configuration information.

According to this network configuring method, the configuration information is read, by operation, from the non-volatile storage medium storing the configuration information generated in advance from the information that is unique to the display apparatus, and network connection configuration is performed based on the configuration information that is read.

According to a display apparatus of the present invention, by storing the configuration information corresponding to the configuration information for performing network connection stored in the first storage means in the second storage means comprised of a non-volatile storage medium, and loading this second storage means into the information terminal apparatus, information transmitted from the information terminal apparatus and received via the first communications means is outputted to the display section under the control of the control section. Thus, network connection configuration is made simple and security is ensured, while the information transmitted from the information terminal apparatus can be displayed on the display section.

According to an information terminal apparatus of the present invention, the non-volatile storage medium, which stores the configuration information generated in advance from the information that is unique to the display apparatus, is loaded into the loading means, the configuration information is read from the non-volatile storage medium under the control of the control means in accordance with user operation, network connection configuration is performed, and information is outputted to the communications means. Thus, network connection configuration is made simple and security is ensured, while it is possible to transmission information to the display apparatus.

According to a network system of the present invention, the configuration information corresponding to the configuration information for performing network connection stored in the first storage means is stored in the second storage means comprised of the non-volatile storage medium, and by loading this second storage means into the information terminal apparatus, the display apparatus is able to output information, which is transmitted from the information terminal apparatus and received via the first communications means, to the display section under the control of the control section. In addition, when the control means detects the loading of the above-mentioned second storage means into the loading means, the information terminal apparatus is able to have the control means read the configuration information from the second storage means, perform configuration so as to enable communications via the network, and transmission information to the display apparatus via the second communications means. Thus, as a system, it makes network connection configuration simple and ensures security, while making it possible to transmission information from the information terminal apparatus to the display apparatus and display it on the display section.

According to a network configuring method of the present invention, the configuration information is read, as operated, from the non-volatile storage medium storing the configuration information generated in advance from the information that is unique to the display apparatus, and network connection configuration is performed based on the configuration information that is read. Thus, the network connection configuration for the display apparatus and the information terminal apparatus is made simple, and security is ensured.

### BRIEF DESCRIPTION OF THE DRAWINGS

FIG. 1 is a basic configuration diagram of an image display system;
FIG. 2 is a block diagram schematically showing a configuration of a display apparatus;
FIG. 3 is a block diagram schematically showing a configuration of an information terminal apparatus;
FIG. 4 is a system configuration diagram of software used by a projector of a display apparatus and an information terminal apparatus (PC);
FIG. 5 is a diagram showing an example of configuration information;
FIG. 6 is a block diagram showing a hardware configuration of a display apparatus;
FIG. 7 is a block diagram showing a hardware configuration of an information terminal apparatus;
FIG. 8 is a basic configuration diagram of an image display system comprised of a plurality of information terminal apparatuses and one display apparatus;
FIG. 9 is a diagram showing another example of an image display system to which the present invention is applied;
FIG. 10 is a diagram showing an example of configuration information used in the other example shown in FIG. 9;
FIG. 11 shows yet another example of an image display system to which the present invention is applied;
FIG. 12 is a diagram showing an example of configuration information used in the other example shown in FIG. 11;
FIG. 13 is a basic configuration diagram of an image display system comprised of a plurality of display apparatuses and one information terminal apparatus; and
FIG. 14 is a diagram showing a display apparatus selection list displayed on a display section of an information terminal apparatus.

### DESCRIPTION OF THE PREFERRED EMBODIMENTS

Hereinafter, embodiments of the present invention will be described with reference to the drawings. These embodiments are image display systems serving as examples of a network system including examples of a display apparatus and an information terminal apparatus of the present invention.

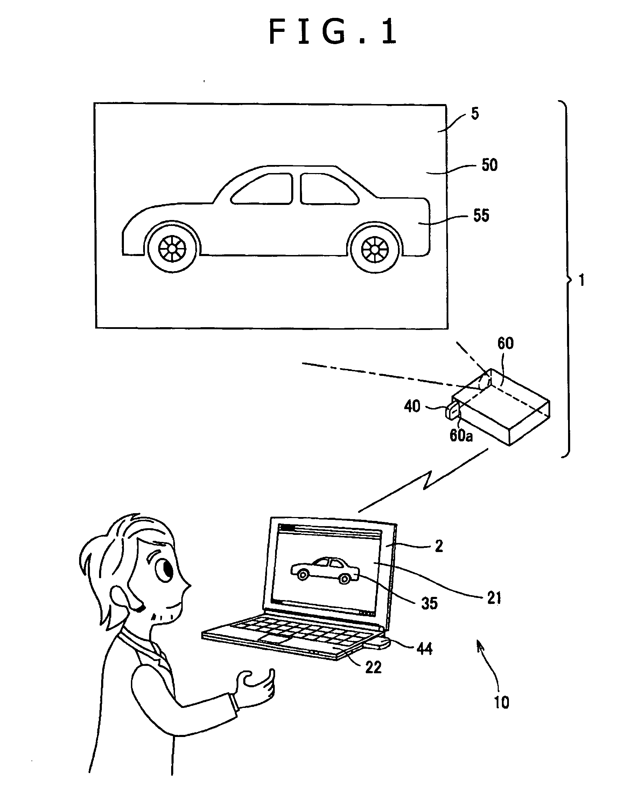

FIG. 1 is a diagram showing a basic configuration of an image display system 10. The image display system 10 is a system in which a wireless network is set up by connecting a display apparatus 1 and an information terminal apparatus 2 to a wireless communications channel. It is to be noted that the image display system 10 is merely an example, and the configuration of the present invention is not to be limited by this one example. There may be just one information terminal apparatus, or there may be several of them. A configuration in which several information terminal apparatuses are provided will be described later.

The wireless communications channel is one that utilizes a transmission path other than a wire cable, such as radio waves and infrared rays. For example, there are wireless communications, such as those for Direct Sequence Spread Spectrum (DSSS) wireless communications, which utilize the 2.4 GHz ISM (Industrial, Scientific and Medical) band which is the same as that adopted in wireless LAN (WLAN) communications compliant with the IEEE 802.11 specifications. These are referred to as Bluetooth. In addition, there are those based on IrDA (Infrared Data Association), which is a specification for infrared data communications.

The display apparatus 1 is comprised of a screen 5, which is an example of a display section, and an image projection apparatus (projector) 60 that projects an image 55 onto a display screen 50 of the screen 5. A communications module 40, such as a wireless connection module, for example, is inserted into a slot 60a on the projector 60. This communications module 40 is for communicating with the information terminal apparatus 2, and is used for transmitting and receiving request signals, response signals, rejection signals and the like for connecting or disconnecting. In addition, the module 40 is used for receiving image information that is sent from the information terminal apparatus 2 via the wireless network.

The information terminal apparatus 2 may be, for example, a personal computer (PC). A communications module 44, such as a wireless connection module, is also attached to the body of the information terminal apparatus 2 via a slot. This communications module 44 is also used for transmitting and receiving request signals, response signals, rejection signals and the like for the connection and disconnection of communications with the communications module 40 of the projector 60. In addition, it is also used for transmitting image information to the projector 60. Needless to say, so long as the information terminal apparatus is capable of having communications means, such as the above-mentioned communications module 44, mounted thereon and has functions of transmitting images, it need not be a PC. For example, it may be a portable information terminal (PDA), a mobile phone, a digital camera and the like.

In addition, the description above refers only to image information as the subject of transmission, but it is not limited thereto, and other data and document files may also be transmitted instead of image information.

The information terminal apparatus 2, for example, encrypts image information corresponding to an image 35 displayed on a display section 21, and transmits it to the projector 60 of the display apparatus 1 through the communications module 44. The projector 60 receives, through the communications module 40, the above-mentioned encrypted image information wirelessly transmitted from the information terminal apparatus 2 via the above-mentioned wireless communications channel and projects it onto the display screen 50 of the screen 5 as an enlarged image 55 after converting it into decrypted image information.

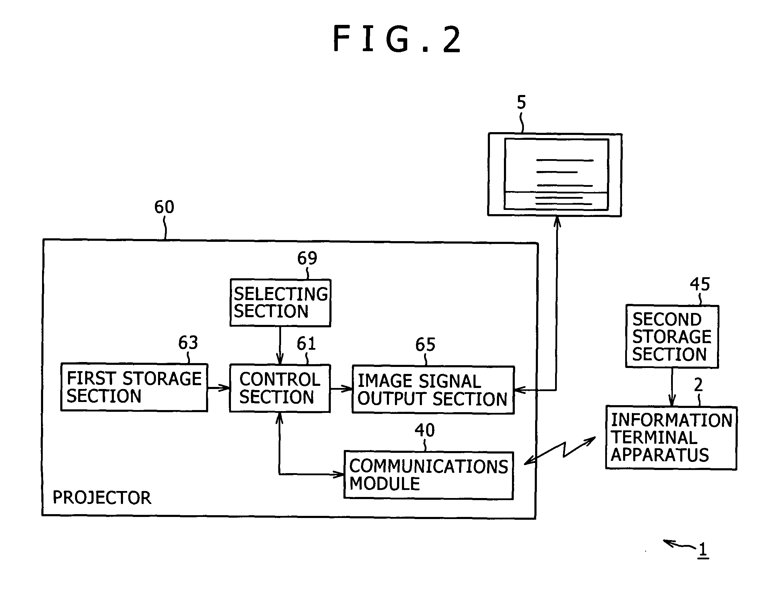

FIG. 2 is a block diagram schematically showing a configuration of the display apparatus 1. The display apparatus 1 is comprised of the screen 5 and the projector 60. The projector 60 is comprised of a first storage section 63 storing configuration information for performing network connection, the communications module 40 for performing communications via the network, a control section 61 that reads the configuration information from the first storage section 63 and performs configuration so as to enable communications via the network, a selecting section 69, and an image signal output section 65. In addition, the display apparatus 1 may come with a second storage section 45 for the information terminal apparatus 2 to be connected to the network. The second storage section 45 is comprised of a non-volatile storage medium, is loadable into the information terminal apparatus 2 to be connected to the network via the communications module 40 and stores configuration information corresponding to the configuration information stored in the first storage section 63.

The control section 61 performs control so as have the image information, which is transmitted from the information terminal apparatus 2 connected to the network and received via the communications module 40, be outputted to the screen 5, and hands it over to the image signal output section 65. The image signal output section 65 is controlled by the control section 61, generates image signals based on the above-mentioned image information, and hands them over to the screen 5. The screen 5 displays an image based on the image signals generated by the image signal output section 65 under the control of the control section 61.

The selecting section 69 selects, as operated by the user, key points and selection points on the image displayed on the screen 5.

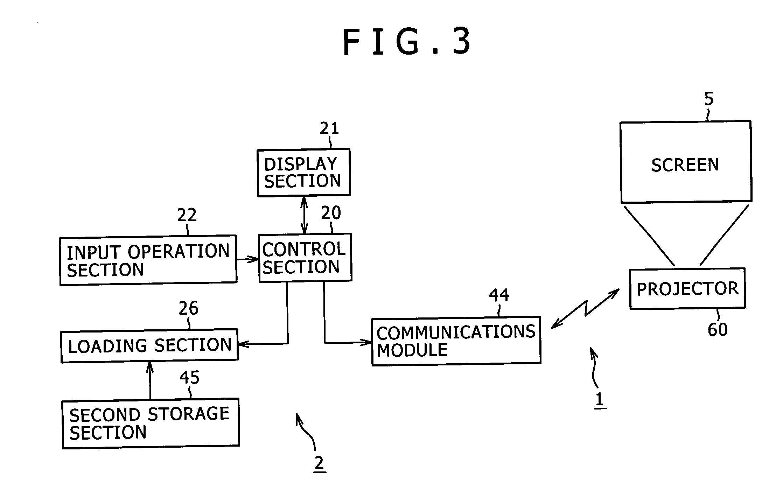

FIG. 3 is a block diagram schematically showing a configuration of the information terminal apparatus 2. The information terminal apparatus includes the display section 21 and the communications module 44, and transmits, via the communications module 44, image information corresponding to an image displayed on the display section 21 to the projector 60 of the display apparatus 1 connected to the wireless network.

The information terminal apparatus 2 is therefore comprised of a loading section 26 for having the second storage section 45, which is a non-volatile storage medium and which stores configuration information that is generated in advance from information that is unique to the display apparatus 1, loaded, and a control section 20 which, as operated by the user, reads the above-mentioned configuration information from the second storage section 45 loaded into the loading section 26, performs wireless network connection configuration, while performing control so as to output the above-mentioned image information to the communications module 44.

Specifically, the control section 20 detects the loading of the second storage section 45 into the loading section 26, reads the configuration information from the second storage section 45, performs configuration so as to enable communications via the wireless network, and outputs, to the communications module 44, the image information selected through an input operation section 22 and displayed on the display section 21.

Once communications with the display apparatus 1 via the wireless network becomes possible under the control of the control section 20, the communications module 44, as described above, transmits the same image information as the image information displayed on the display section 21 to the communications module 40 of the display apparatus 1.

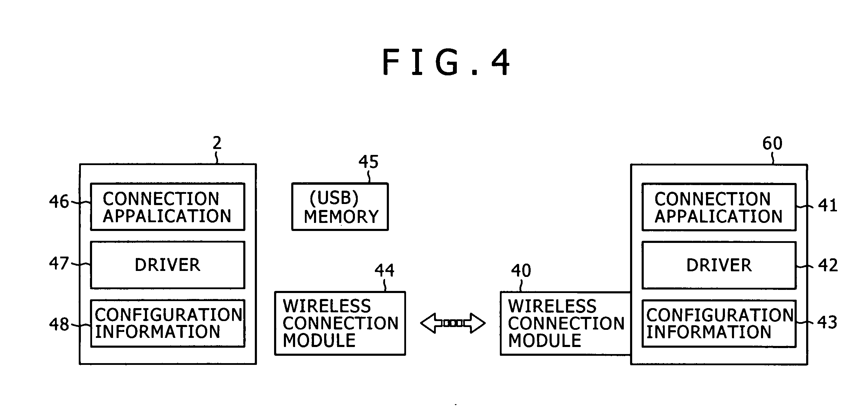

The display apparatus 1, whose configuration is shown schematically in FIG. 2, and the information terminal apparatus 2, whose configuration is shown schematically in FIG. 3, adopt a hardware configuration that centers around a CPU (Central Processing Unit) as will be described later. A system configuration of software that is necessary for the hardware configuration of the display apparatus 1 and the information terminal apparatus 2 is shown in FIG. 4. It is used in performing wireless network connection configuration, or in transmitting and receiving image information and other control signals and the like via the wireless network.

The display apparatus 1 has, in advance at the time of shipment, a connection application 41 for network connection, a driver 42 for driving the wireless connection module, and configuration information 43 for network connection written within a ROM 63, which will be described later. In addition, the display apparatus 1 comes with the wireless connection module 40 as an accessory.

This wireless connection module 40 may be of a CF (Compact Flash) card type including an antenna and a transmission/reception chip, and may be used by inserting it into the dedicated slot 60a provided on the projector 60 of the display apparatus 1. More specifically, transmission data is sent from a CPU described later to a baseband processing section via a communications control section or an I/F section, signal processed at the baseband processing section, impressed upon a carrier wave at an RF processing section, and wirelessly transmitted to a device in its vicinity from the wireless communications antenna. On the other hand, radio waves wirelessly transmitted from devices in the vicinity are communicated to the CPU described later via the communications control section or the I/F section after being received by the local wireless communications antenna, having signals extracted at the RF processing section, and being signal processed at the baseband signal processing section.

The connection application 41 is executed by the CPU described later and carries out connection to the wireless network and the transfer of images using the driver 42 and the configuration information 43.

The display apparatus 1 may come with the wireless connection module 44 of a USB (Universal Serial Bus) type for the information terminal apparatus 2 to be connected to the network, and which has functions similar to those of the wireless connection module 40. In addition, the display apparatus 1 may come with a USB memory 45 in which a connection application 46, a driver 47 and configuration information 48 similar to the above-mentioned connection application 41, driver 42 and configuration information 43 are stored.

In order to connect the projector 60 of the display apparatus 1 and the information terminal apparatus 2 to the wireless network, the user clicks on a set-up file with a mouse after inserting the USB memory 45 into the loading section 26 of the information terminal apparatus 2. As a result, an installer will automatically be activated on the information terminal apparatus 2, and the connection application 46, the driver 47 and the configuration information 48 will automatically be stored in its HDD (Hard Disk Drive). Then, if the user inserts the wireless connection module 44 into the USB jack (slot) on the information terminal apparatus 2, connection configuration for the wireless network will be completed, and transmission and reception of data with the projector 60 of the display apparatus 1 that is already running will be carried out via the wireless network.

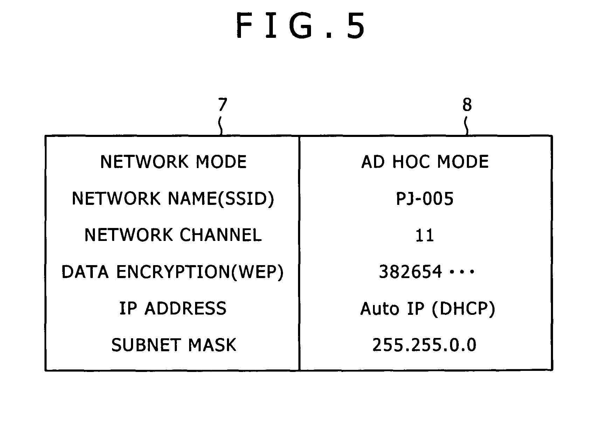

The configuration information 43 and 48 are configuration information for carrying out wireless network connection. FIG. 5 is a diagram showing an example of the configuration information 43 and 48. Configuration information items 7 and configuration information contents 8 are shown. Network mode of the configuration information items 7 is configuration information that differentiates between a mode for connecting to an access point (access point connection mode) and a mode for connecting one-on-one with a given device (ad hoc mode). For the kind of connection shown in FIG. 1, this item is set to ad hoc mode. Network name (SSID) is the name of the network, and is a unique name for the display apparatus 1. Here, it is PJ-005. A reference "005" is a serial number. Network channel indicates the frequency band used. For example, it may be a channel varying from "1" and "11." Encryption of data (WEP) is information specifying the method of encryption for protecting data from any risk of interception since the present system constitutes a wireless network. The network mode, network name, network channel and method of data encryption mentioned above are information relating to the configuration of the wireless connection modules 40 and 44.

In addition, IP address (Internet Protocol Address) of the configuration information items 7 would normally represent a series of numbers corresponding to the address of a computer connected to the Internet. Here, it indicates the addresses, within the network, of the projector 60 of the display apparatus 1 and of the information terminal apparatus 2. For example, in the configuration information 48 for the information terminal apparatus 2, it would be auto IP (DHCP). The display apparatus 1 is not a DHCP server of the wireless network, but since there is no configuration item corresponding to auto IP to begin with, by setting it to DHCP, a flow is established where a DHCP server is searched for, and once it is identified that there is none, auto IP operates. Subnet mask is a bit string for dividing subnets in an IP network. A network address is obtained by a logical AND operation of an IP address and a subnet mask.

With respect to the projector 60 of the display apparatus 1, the configuration information 43 is already stored in the ROM 63 along with the connection application 41 and the driver 42 at the time of purchase of the projector 60. With respect to the information terminal apparatus 2, the configuration information 48, as described above, is installed in the HDD or the like from the USB memory 45 along with the connection application 46 and the driver 47.

Of these configuration information 43 and configuration information 48, information necessary for wireless network connection, that is, information relating to the configuration of the wireless connection modules 40 and 44, is created from information unique to the projector 60 of the display apparatus 1, for example, its serial number and the like. For example, the network name "PJ-005" shown in the above-mentioned FIG. 5 is created from the serial number "00005" that is unique to the projector 60 of the display apparatus 1. In addition, "382654...," which is the data encryption method (WEP), is also a 128-bit encryption key generated from the above-mentioned unique serial number.

Summarizing the above, the network name and the data encryption key in the configuration information 43 and 48 are determined from information unique to the projector 60 of the display apparatus 1, and these information, along with other configuration information, are, at the time of factory shipment, written in the ROM 63 within the projector 60 of the display apparatus 1 and in the USB memory 45.

What is characteristic about this image display system 10 is the fact that the USB memory 45 and the wireless connection module 44 for the information terminal apparatus 2 are included with the projector 60 of the display apparatus 1 at the time of purchase. Needless to say, the user may also purchase the USB module and the wireless connection module at a later date. Of the configuration information 48 pre-stored in the USB memory 45, the information relating to the configuration of the wireless connection module 44 shown in FIG. 5 is generated from information that is unique to the projector 60 of the display apparatus 1.

Thus, by simply inserting the USB memory 45, which is included at the time of purchase, into the loading section 26 of the information terminal apparatus 2, carrying out a predetermined installation operation, and inserting the wireless connection module 44 into a predetermined slot, the user of the projector 60 of the display apparatus 1 is able to connect the display apparatus 1 and the information terminal apparatus 2 to the wireless network.

In addition, of the configuration information shown in FIG. 5, the network name and WEP key, which are information necessary for wireless network connection, are, in particular, generated in advance from the serial number unique to the projector 60 of the display apparatus 1. Also, by using the configuration method mentioned above, they are automatically set in the information terminal apparatus 2, and thus, no display on the screen 5 is necessary as is conventional. For this reason, since the configuration information is not exposed to a third party, unauthorized entry into or attacks on the network by third parties can be prevented, and, naturally, since unauthorized decryption of encrypted data can also be prevented, security is ensured.

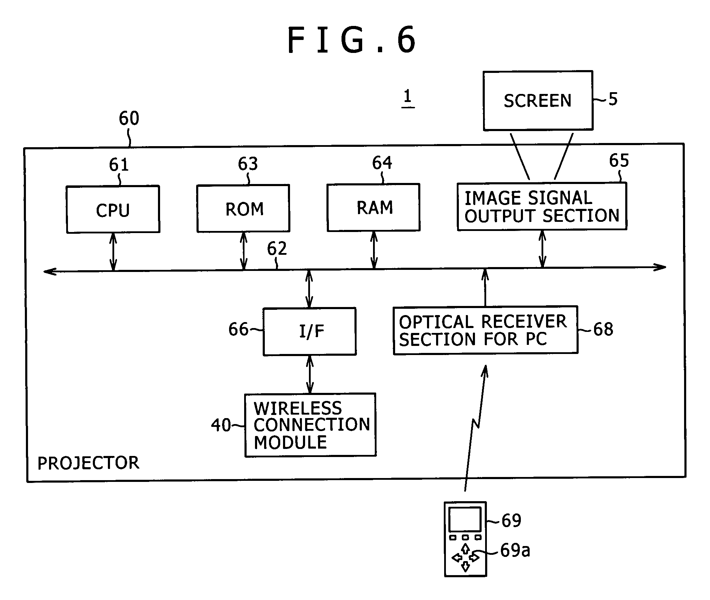

FIG. 6 is a diagram showing a hardware configuration of the display apparatus 1. The read only memory (ROM) 63 and a random access memory (RAM) 64 are connected to a CPU 61 via a bus 62. In addition, the image signal output section 65 that projects image signals onto the screen 5, an I/F (Interface) 66, such as PCMCIA (Personal Computer Memory Card International Association), that interfaces the wireless connection module 40, and further a remote control optical receiver section 68 are also connected to the CPU 61 via the bus 62. The remote control optical receiver section 68 receives remote control signals from a remote controller 69.

The screen 5 is comparable to the screen 5 shown in FIG. 2. Similarly, the wireless connection module 40 is an example of the communications module 40 shown in FIG. 2. The ROM 63 or the RAM 64 is an example of the first storage section 63 shown in FIG. 2, and stores, already at the time of shipment, the connection application 41, the driver 42 and the configuration information 43. Similarly, the CPU 61 is an example of the control section 61, and reads from the ROM 63, which is the first storage section, the above-mentioned configuration information and performs configuration so as to enable communications via the network. In addition, the CPU 61 performs control so as to output image information, which is transmitted from the information terminal apparatus 2 connected to the network and received via the wireless connection module 40, to the screen 5, and hands it over to the image signal output section 65. The image signal output section 65 is controlled by the CPU 61, generates image signals based on the above-mentioned image data, and hands them over to the screen 5. The screen 5 displays an image based on the image signals generated by the image signal output section 65 under the control of the CPU 61. In the RAM 64, various data processed by the CPU 61 are temporarily stored.

The remote controller 69 is an example of the selecting section 69 shown in FIG. 2, and selects, as operated by the user, key points and selection points on the image displayed on the screen 5. In addition, using the remote controller 69, operations such as wireless network connection configuration, switching between connection and disconnection with the information terminal apparatus, and so forth may be performed.

As described above, since the remote control optical receiver section 68 is provided on the display apparatus 1, infrared remote control signals from the remote controller 69 can be received.

In accordance with remote control signals received by the remote control optical receiver section 68, the CPU 61 references, for example, a data table, which is stored in the ROM 63 or the RAM 64, for interpreting the remote control signals and interprets commands.

In addition, when operations for switching or disconnecting the information terminal apparatus are performed by the user using the remote controller 69, the CPU 61 interprets the command, generates the respective transmission signals corresponding to the command, and sends them to the wireless connection module 44 of the appropriate information terminal apparatus from the wireless connection module 40 via the I/F 66. Thus, the switching and disconnecting of the information terminal apparatus become possible through operations on the side of the display apparatus 1.

In addition, the remote controller 69 is capable of controlling, through remote operations and through the display apparatus 1, the fast forwarding/rewinding of the image displayed on the display section of the selected and connected information terminal apparatus 2. In this case, too, when the projector 60 of the display apparatus 1 receives the infrared remote control signal from the remote controller 69 through the remote control optical receiver section 68, the CPU 61 references, for example, the table, which is stored in the ROM 63 or the RAM 64, for interpreting the remote control signals and interprets the command, the CPU 61 generates the respective transmission control data corresponding to the command, and sends the respective transmission control data from the wireless connection module 40 to the wireless connection module 44 of the information terminal apparatus 2 via the I/F 66. The information terminal apparatus 2 interprets the control data, which is received through the wireless connection module 44, for fast forwarding/rewinding images and fast forwards/rewinds the image information displayed on its display section. In conjunction therewith, the image projected onto the screen 5 of the display apparatus 1 is also fast forwarded/rewound.

With the remote controller 69, it is further possible to perform such control as making the screen 5 of the display apparatus 5 black. In addition, the remote controller 69 may be given laser pointer functions.

In addition, the process of fast forwarding/rewinding the image on the information terminal apparatus 2, the function of performing the control whereby the screen 5 is turned black, and the laser pointer function may be isolated from the remote controller 69 to provide a dedicated presentation tool.

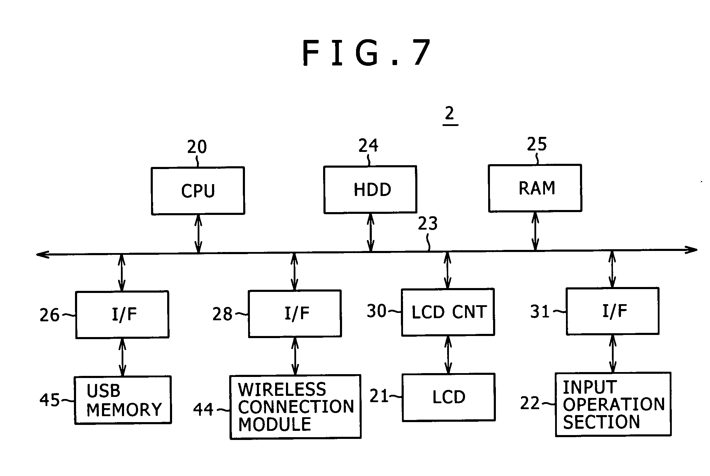

FIG. 7 is a diagram showing a hardware configuration of the information terminal apparatus 2. A hard disk drive (HDD) 24 and a random access memory (RAM) 25 are connected to a CPU 20 via a bus 23. In addition, a USB I/F 26 for interfacing the USB memory 45 and an I/F 28 for interfacing the wireless connection module 44 are connected to the CPU 20 via the bus 23. Further, an LCD controller 30 for controlling a liquid crystal display apparatus LCD 21, which is the above-mentioned display section of its own, and an I/F 31 for interfacing the input operation section 22 such as a keyboard or a mouse are connected to the CPU 20 via the bus 23.

When a connection request signal or a transmission signal for disconnection is sent from the side of the display apparatus 1, at the information terminal apparatus 2, each transmission signal received by the wireless connection module 44 is handed over to the CPU 20 via the I/F 28, and is processed by the CPU 20. The processing of transmission signals to the display apparatus 1 from the information terminal apparatus 2 is performed in a similar fashion.

Below, with respect to the image display system 10 comprised of the display apparatus 1 of the hardware configuration shown in FIG. 6 and the information terminal apparatus 2 of the hardware configuration shown in FIG. 7, operations from the configuration for connecting to the wireless network to the displaying of the image from the information terminal apparatus 2 on the screen 5 by the display apparatus 1 are described. These are operations from after the user purchases the display apparatus 1 and up to where a wireless network with the information terminal apparatus 2 s/he already owns is set up, and image transfer is made possible.

First, the user loads the USB memory 45, which comes with the display apparatus 1, into the loading section 26 of the information terminal apparatus 2. Interfaced by the USB I/F 26, an installation program retrieved by the CPU 20 via the bus 23 is displayed on the LCD 21 through the LCD controller 30. The user activates the installation program using the input operation section 22 such as a mouse. As prompted by the installation program, the user chooses between YES and NO, in response to which the program proceeds, and the connection application 46, the driver 47 and the configuration information 48 in FIG. 4, which are already stored in the USB memory 45, are installed in the HDD 24.

Of the configuration information 48, information necessary for wireless network connection, that is, information relating to the configuration of the wireless connection module 44, is created from information unique to the display apparatus 1, for example, its serial number and the like. For example, the network name "PJ-005" shown in FIG. 5 is created from the serial number "00005" that is unique to the display apparatus 1. In addition, "382654...," which is the data encryption method (WEP), is also a 128-bit encryption key generated from the above-mentioned unique serial number. In addition to these configuration information, network mode, network channel, the IP address (IP address) and subnet mask of the information terminal apparatus, which are shown in FIG. 5, are also set automatically.

Next, when the user inserts the wireless connection module 44 into the predetermined slot, communications with the display apparatus 1 are begun under the control of the CPU 20 via the I/F 28.

Since the connection application 41, the driver 42 and the configuration information 43 are already stored, at the time of shipment, in the ROM 63 of the display apparatus 1, the display apparatus 1 is able to communicate with the information terminal apparatus 2 via its own wireless connection module 40.

The information terminal apparatus 2 encrypts, for example, image information corresponding to the image displayed on the LCD 21 using the WEP key "382654..." and transmits it to the display apparatus 1 from the wireless connection module 44. The display apparatus 1 receives through the wireless connection module 40 the above-mentioned encrypted image information wirelessly transmitted from the information terminal apparatus 2 via the wireless communications path, decrypts it using the WEP key generated from the unique serial number and stored in the ROM 63, and projects it onto the display screen 50 of the screen 5 as the enlarged image 55 after converting it into image information at the image signal output section 65.

Thus, by simply inserting the USB memory 45, which comes with the display apparatus 1 at the time of purchase, into the loading section 26 of the information terminal apparatus 2, performing a predetermined installation operation, and inserting the wireless connection module 44 into the predetermined slot, the user of the display apparatus 1 is able to connect the display apparatus 1 and the information terminal apparatus 2 to the wireless network. The wireless network connection configuration can be performed easily by using the configuring method of the present invention.

In addition, of the configuration information shown in FIG. 5, the network name and WEP key, which are information necessary for wireless network connection, are, in particular, generated in advance from the serial number unique to the display apparatus 1. Also, by using the configuration method mentioned above, they are automatically set in the information terminal apparatus 2, and thus, no display on the screen 5 is necessary as is conventional. For this reason, since the configuration information is not exposed to a third party, unauthorized entry into or attacks on the network by third parties can be prevented, and, naturally, since unauthorized decryption of encrypted data can also be prevented, security is ensured.

It is to be noted that although the configuration of the image display system 10 shown in FIG. 1 is such that for the projector 60 of the display apparatus 1 one information terminal apparatus 2 is connected to the wireless network, the present invention may just as well be applied to a system in which a plurality of information terminal apparatuses are connected, for the display apparatus 1, to the wireless network.

For example, if a user, using the remote controller 69, selects the desired information terminal apparatus and requests connection, the CPU 61 generates a connection request signal with respect to the selected information terminal apparatus, and sends it to the wireless connection module 44 of the appropriate information terminal apparatus from the wireless connection module 40 via the I/F 66. Thus, it becomes possible to configure wireless network connection.

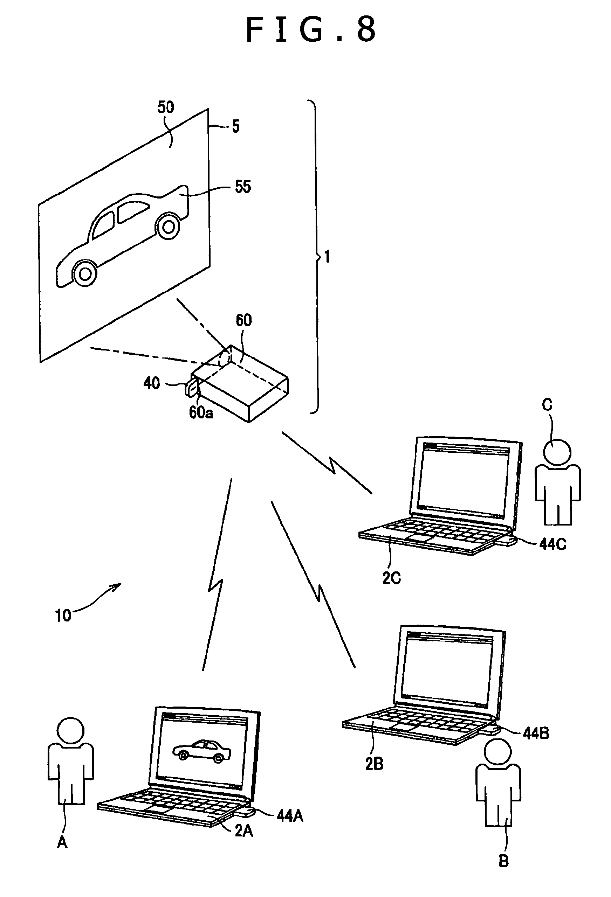

FIG. 8 is a configuration diagram of an image display system 10 in which a plurality of information terminal apparatuses 2A, 2B, 2C and the display apparatus 1 are connected to a wireless network. The information terminal apparatuses 2A, 2B and 2C all share a configuration similar to that of the information terminal apparatus 2 described with reference to FIG. 3 and FIG. 7, and each is connected to the wireless network based on a configuring method of the present invention. It is assumed that the USB memories 45 and the wireless connection modules 44 for the information terminal apparatuses 2A, 2B and 2C come with the projector 60. Naturally, the user may also purchase these USB memories and wireless connection modules at a later date. Of the configuration information 48 pre-stored in the plurality of USB memories 45, all of the information relating to the configuration of the wireless connection module 44 shown in FIG. 5 is generated from information unique to the display apparatus 1. Therefore, for the plurality of information terminal apparatuses, information relating to the configuration of the wireless connection modules 44 would be the same. Of the configuration information 48, the remaining IP address and subnet mask of the information terminal apparatuses are data unique to each information terminal apparatus. The projector 60 has a fixed IP address, but as for the plurality of information terminal apparatuses, by virtue of the auto IP function, IP addresses are allocated automatically. When the IP address changes, the subnet mask automatically changes as well.

Thus, by simply inserting the plurality of USB memories 45, which are included at the time of purchase, into the respective loading section 26 of the plurality of information terminal apparatuses 2A, 2B and 2C, carrying out a predetermined installation operation, and inserting the plurality of wireless connection modules 44 into the respective slots, the user of the projector 60 of the display apparatus 1 may connect the projector 60 of the display apparatus 1 and the plurality of information terminal apparatuses 2A, 2B and 2C to the wireless network. Therefore, configuration for wireless network connection can be performed with ease by using a configuring method of the present invention.

In addition, of the configuration information shown in FIG. 5, the network name and WEP key, which are information necessary for wireless network connection, are, in particular, generated in advance from the serial number unique to the projector 60 of the display apparatus 1. Also, by using the configuration method mentioned above, they are automatically set in the plurality of information terminal apparatuses 2A, 2B and 2C, and thus, no display on the screen is necessary as is conventional. For this reason, since the configuration information is not exposed to a third party, unauthorized entry into or attacks on the network by third parties can be prevented, and, naturally, since unauthorized decryption of encrypted data can also be prevented, security is ensured.

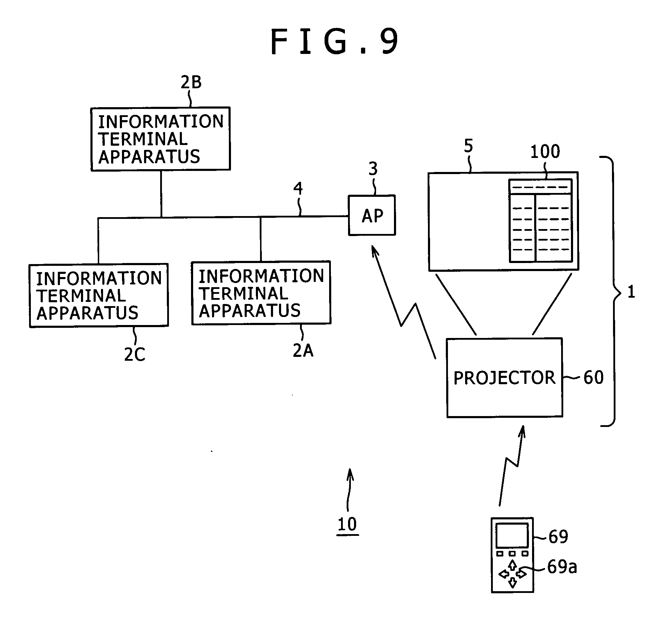

FIG. 9 is a diagram showing another example of an image display system 10 to which the present invention is applied. This other image display system 10 is a system in which the display apparatus 1 and the information terminal apparatuses 2A, 2B and 2C are connected to a wireless network via an access point 3 compliant with IEEE 802.11b. Each of the information terminal apparatuses 2A, 2B and 2C has a configuration similar to the information terminal apparatus 2 described with reference to FIG. 3 and FIG. 7, and is connected through a LAN 4.

Of the configuration information 48 pre-stored in the plurality of USB memories 45, all information relating to the configuration of the access point 3 is generated from information that is unique to the display apparatus 1. Therefore, information relating to the configuration of the access point 3 would be the same for the plurality of information terminal apparatuses.

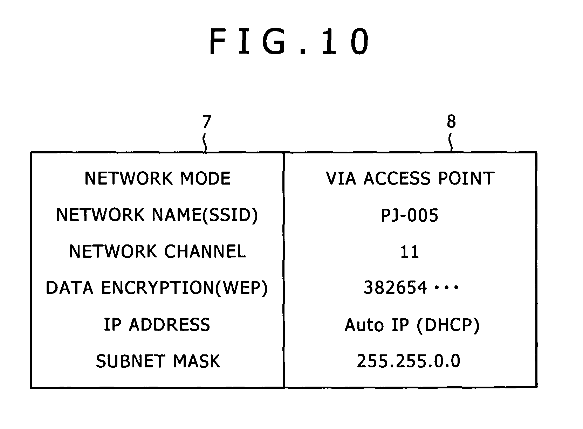

FIG. 10 is a diagram showing an example of the configuration information 43 and 48 for a case of access point connection. In this case, the configuration information contents differ from that shown in FIG. 5 in that the network mode is access point connection. The remaining configuration information contents 8 for the configuration information items 7 are similar to those in FIG. 5. Network mode, network name, network channel, data encryption method are information relating to network configuration via an access point.

To summarize the above, in the other example of the image display system 10 shown in FIG. 9, too, the network name and the data encryption key in the configuration information 43 and 48 are determined from information unique to the projector 60 of the display apparatus 1, and these information are, along with the other configuration information, written in the ROM 43 within the projector 60 of the display apparatus and in the USB memories 45.

What is characteristic about this other example of the image display system 10 is the fact that the USB memories 45 for the information terminal apparatuses 2 come with the projector 60 of the display apparatus 1 at the time of purchase. Needless to say, the user may purchase the USB memories 45 at a later date. Of the configuration information 48 pre-stored in the USB memories 45, the information relating to access point connection configuration shown in FIG. 10 is generated from information unique to the projector 60 of the display apparatus 1.

Thus, in this other example, too, by simply inserting the plurality of USB memories 45, which are included at the time of purchase, into the respective loading sections 26 of the plurality of information terminal apparatuses 2A, 2B and 2C, carrying out a predetermined installation operation, and inserting the plurality of wireless connection modules 44 into the respective slots, the user of the projector 60 of the display apparatus 1 is able to connect the display apparatus 1 and the plurality of information terminal apparatuses 2A, 2B and 2C to the network.

In addition, of the configuration information shown in FIG. 10, the network name and WEP key, in particular, are generated in advance from the serial number unique to the projector 60 of the display apparatus 1. Also, by using the configuration method mentioned above, they are automatically set in the plurality of information terminal apparatuses, and thus, no display on the screen 5 is necessary as is conventional. Thus, since the configuration information is not exposed to a third party, unauthorized entry into or attacks on the network by third parties can be prevented, and, naturally, since unauthorized decryption of encrypted data can also be prevented, security is ensured.

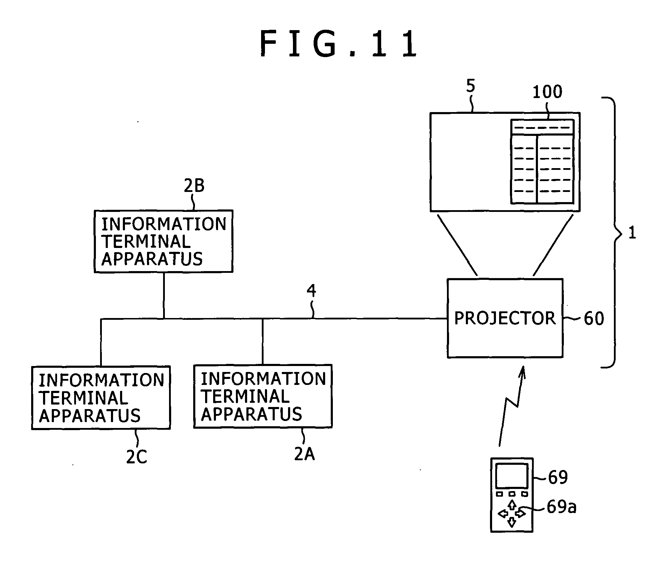

FIG. 11 is a diagram showing an example of yet another image display system to which the present invention is applied. This other example of an image display system is a system in which the display apparatus 1 and the information terminal apparatuses 2A, 2B and 2C are connected to a network by a wire LAN 4. The information terminal apparatuses 2A, 2B and 2C all share a configuration similar to that of the information terminal apparatus 2 described with reference to FIG. 3 and FIG. 7.

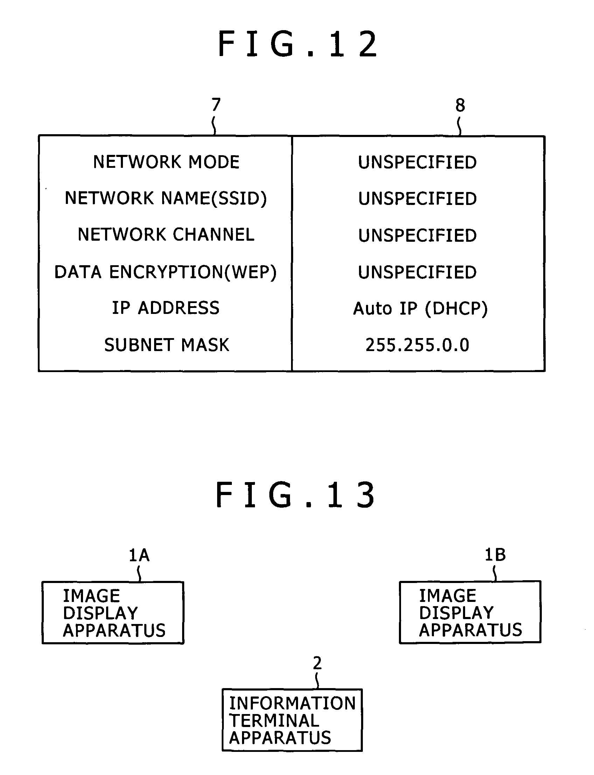

FIG. 12 is a diagram showing an example of the configuration information 43 and 48 in the case of the above-mentioned other example of an image display system where connection is based on a wire LAN. In the configuration information of this case, network mode, network name, network channel and data encryption method are left unspecified. IP address and subnet mask are set as in the configuration information contents 8 shown in FIG. 12.

IP address (Internet Protocol Address) of the configuration information items 7 represents a series of numbers corresponding to the address of a computer connected to the Internet, and indicates the addresses, within the network, of the projector 60 of the display apparatus 1 and of the information terminal apparatuses 2A, 2B and 2C. For example, in the configuration information 48 for the information terminal apparatuses 2A, 2B and 2C, it would be auto IP (DHCP). The display apparatus 1 is not a DHCP server of the network, but since there is no configuration item corresponding to auto IP to begin with, by setting it to DHCP, a flow is established where a DHCP server is searched for, and once it is identified that there is none, auto IP operates. Subnet mask is a bit string for dividing subnets in an IP network. A network address is obtained by a logical AND operation of an IP address and a subnet mask.

Further, the present invention may also be applied to an image display system, such as the one shown in FIG. 13, in which one information terminal apparatus 2 switches between a plurality of display apparatuses 1A and 1B for wireless network connection. Specifically, this may be a case where a different display apparatus 1B is newly purchased at a later date in addition to a display apparatus 1A that is already owned. Assuming that the user wants to connect with the display apparatus 1B, in order to alter wireless network connection, by entering information unique to the display apparatus 1B (such as its serial number) through the connection application 46, the display apparatus to be connected can be changed.

By connecting the USB memory 45 that comes with the newly purchased display apparatus 1B and performing installation, and then connecting a WL module 44, which is also included, the information terminal apparatus 2 becomes wirelessly network connected to the display apparatus 1B. However, it becomes unable to connect with the display apparatus 1A already owned.

A serial number unique to the new display apparatus 1B is entered through the information terminal apparatus 2 by way of the connection application. As a result, configuration information for the new display apparatus 1B is added to the appropriate section of the already configured configuration information. Of the configuration information shown in FIG. 5, in particular, information that is necessary for wireless network connection, such as network name, network channel, data encryption (WEP) type and the like are additionally set in accordance with the above-mentioned serial number unique to the new display apparatus 1B that has been entered. Thus, even if a plurality of display apparatuses 1A and 1B exist, because each network name is a name that is unique to each display apparatus, no connection confusion arises for the information terminal apparatus 2. In addition, since a different WEP key is used for each display apparatus, interception is made difficult.

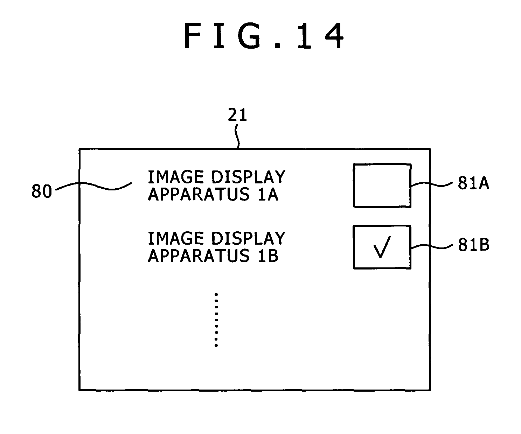

Then, a display apparatus selection list 80, such as the one shown in FIG. 14, is displayed on the LCD 21 of the information terminal apparatus 2. At first, only the display apparatus 1A that is already owned is displayed. In order for the user to add the new display apparatus 1B, the add button is pressed in the connection application, and the guidance "please enter the serial number" is displayed. Then, once the user enters the serial number of the new display apparatus 1B, the connection application creates the above-mentioned network name, network channel, data encryption (WEP) type and the like, and adds them to the above-mentioned configuration information 48. When this series of processes is finished, the display apparatus 1B is additionally displayed on the selection list 80. If the user selects a selection check section 81B by clicking on it with a mouse, the information terminal apparatus 2 is wirelessly network connected to the selected display apparatus 1B. Naturally, the above-mentioned network name, network channel, data encryption (WEP) type and the like, which are created by the connection application based on the information unique to the new display apparatus 1B entered by the user, coincide with the configuration information 43 written in the ROM 63 within the display apparatus 1B.

Thus, even in a case where the new display apparatus 1B is added, by simply entering information unique to the display apparatus 1B as prompted by the connection application, the user is able to change the display apparatus to be wirelessly network connected. In this case, too, since the configuration information is not exposed to a third party, unauthorized entry into or attacks on the network by third parties can be prevented, and, naturally, since unauthorized decryption of encrypted data can also be prevented, security is ensured.

In addition, in the embodiments above, the WL module 44 and the USB memory 45 for the information terminal apparatus 2 were made separate, but by integrating them, operations for connecting with the information terminal apparatus 2 can be made simpler. In addition, since this means the configuration information will be stored in the WL module, the user will be able to change the display apparatus to be wirelessly network connected by simply changing the WL module.

In addition, a configuring method of the present invention can be applied even in cases where the above-mentioned information terminal apparatus is already connected to some other network, such as a wire LAN, or a wireless LAN via an access point. In such cases, since the information terminal apparatus 2 will have two IP addresses, the information terminal apparatus 2 will be wirelessly network connected with the display apparatus 1 when the above-mentioned WL module 44 is inserted.

In addition, the present invention may be used to set the configuration in connecting, as the information terminal apparatus, a portable information terminal (PDA) or some other information terminal apparatus besides a personal computer, to a wireless network. In addition, the present invention may be applied in cases where information terminal apparatuses are mutually connected to a wireless network, or it may be applied to other products forming a wireless network with an information terminal apparatus.

Since the invention disclosed herein may be embodied in other specific forms without departing from the spirit or general characteristics thereof, some of which forms have been indicated, the embodiments described herein are to be considered in all respects illustrative and not restrictive. The scope of the invention is to be indicated by the appended claims, rather than by the foregoing description, and all changes which come within the meaning and range of equivalents of the claims are intended to be embraced therein.

## Claims

1. A display apparatus including first storage means for storing configuration information to perform network connection, and a display section, comprising:
communications means for performing communications via a network;
second storage means comprised of a non-volatile storage medium and is loadable into an information terminal apparatus connected to the display apparatus by network connection via the communications means for storing configuration information corresponding to the configuration information stored in the first storage means; and
control means for performing configuration so as to enable communications via the network by reading the configuration information from the first storage means, and for controlling to output to the display section information transmitted from the information terminal apparatus and received via the communications means.

2. The display apparatus as cited in claim 1, wherein
the configuration information to be stored in the second storage means is the information generated in advance from the information unique to the display apparatus; and is not displayed in the information terminal apparatus and the display apparatus.

3. The display apparatus as cited in claim 1, wherein
said communications means is a detachable wireless connection module; and
a network connection to the information terminal apparatus is performed by wireless.

4. The display apparatus as cited in claim 3, wherein
said first storage means and the second storage means share a network mode, a network name, a network channel, and a data encryption key as the configuration information for the wireless network connection.

5. An information terminal apparatus including a display section and communications means, and which transmits via the communications means information displayed on the display section to a display apparatus connected to a network, comprising:
loading means for loading a non-volatile storage medium storing configuration information generated in advance from information unique to the display apparatus; and
control means for performing network connection configuration by reading the configuration information from the non-volatile storage medium loaded into the loading means by operation and for performing control so as to output the information to the communications means.

6. The information terminal apparatus as cited in claim 5, wherein
said communications means is a detachable wireless connection module; and
a network connection to the information terminal apparatus is performed by wireless.

7. The information terminal apparatus as cited in claim 5, wherein
said non-volatile storage medium further stores an application and driver for performing the network connection, and
said control means installs the application, driver, and the configuration information by operation, and performs connection configuration to the network.

8. A network system including a display apparatus and which sets up a network with an information terminal apparatus, wherein
the display apparatus includes;
first communications means for performing network connection with the information terminal apparatus;
first storage means for storing configuration information to perform the network connection;
a display section;
control means for performing configuration to make communications via the network by reading the configuration information from the first storage means and for transmitting to the display section the information received from the information terminal apparatus via the first communications means; and
second storage means able to be loaded into the information processing apparatus and comprises;
a non-volatile storage medium storing configuration information generated in advance from information unique to the display apparatus, and wherein
the information terminal apparatus comprises;
a display section;
second communications means for transmitting information displayed on the display section to the display apparatus connected to the network; loading means for loading the second storage means; and
control means for performing configuration so as to enable communications via the network by detecting if the second storage means is loaded into the loading means and by reading the configuration information from the second storage means, and for controlling so as to output the information to the second communications means.

9. The network system as cited in claim 8, wherein
said first communications means and the second communications means are detachable wireless connection modules, and attached to the display apparatus and the information terminal apparatus; and
a network connection between the display apparatus and the information terminal apparatus is performed by wireless.

10. The network system as cited in claim 9, wherein
said first storage means and the second storage means share a network mode, a network name, a network channel, and a data encryption key as the configuration information for the wireless network connection.

11. The network system as cited in claim 10, wherein
said data encryption key is generated in advance from the information unique to the display apparatus, and is not displayed in the information terminal apparatus and the display apparatus.

12. A network configuring method for connecting an information terminal apparatus to a display apparatus by a network connection, comprising:
a step of reading, from a non-volatile storage medium storing configuration information generated in advance from information unique to the display apparatus, the configuration information by operation; and
a step of performing network connection configuration based on the configuration information.
